# EUROPÄISCHE PATENTANMELDUNG

(11) **EP 2 641 704 A1**
(43) Veröffentlichungstag der Anmeldung: **25.09.2013**
(21) Anmeldenummer: 12197313.5
(22) Anmeldetag: 14.12.2012
(51) Int. Cl.: B25J 19/02

(54) **Robotervorrichtung mit Sensoreinrichtung zur Handhabung, Montage und/oder Bearbeitung von Werkstücken**

(30) Priorität: 14.12.2011 DE 202011109027 U
(71) Anmelder: Carl Cloos Schweisstechnik GmbH, 35708 Haiger (DE)
(72) Erfinder: Paul, Christian, 35686 Dillenburg-Donsbach (DE); Höfner, Lars, 35687 Dillenburg-Niederscheid (DE)
(74) Vertreter: Lippert, Stachow & Partner

(57) **Zusammenfassung**

Die Erfindung betrifft eine Robotervorrichtung (1) mit einer Sensoreinrichtung (100) zur Handhabung, Montage und/oder Bearbeitung von Werkstücken, zumindest umfassend eine Reihe von Gliedern (10, 12, 20, 30, 40, 50, 60, 70) einer kinematischen Kette, welche miteinander durch Dreh- und/oder Schubgelenke verbunden sind, die zumindest teilweise durch gesteuerte Antriebe verstellbar sind, wobei die Gliederreihe an einem Ende eine Drehachse aufweist, welche einen Effektor (131) trägt. Die Robotereinrichtung zeichnet sich dadurch aus, dass die Sensoreinrichtung ein ringartiges Gehäuse (110) umfassend ein Mittenloch (120) aufweist, wobei sich der Effektor und/oder die Effektormedien durch das Mittenloch des Sensorgehäuses erstreckt bzw. erstrecken. Die Erfindung betrifft ferner eine Sensoreinrichtung zum verbinden mit einer herkömmlichen Robotervorrichtung.

## Beschreibung

Die Erfindung betrifft eine Robotervorrichtung mit einer Sensoreinrichtung zur Handhabung, Montage und/oder Bearbeitung von Werkstücken, zumindest umfassend eine Reihe von Gliedern einer kinematischen Kette, welche miteinander durch Dreh- und/oder Schubgelenke verbunden sind, die zumindest teilweise durch gesteuerte Antriebe verstellbar sind, wobei die Gliederreihe an einem Ende eine Drehachse aufweist, welche einen Effektor trägt. Diese den Effektor tragende Achse wird als Endachse bezeichnet.

Eine solche Robotervorrichtung ist beispielsweise auf dem Gebiet des Schweißens, Schneidens, Lackierens oder Vermessens von Werkstücken einsetzbar, der jeweilige Effektor wird in Bezug auf die jeweilige Aufgabe ausgewählt. Ein Effektor kann beispielsweise einen Schweiß- oder Schneidbrenner, eine Lackierdüse, eine Greifhand, einen Fräskopf oder eine Klebstoffdüse etc. umfassen. Der Einsatz von Robotervorrichtungen setzt eine hohe Maßhaltigkeit der Werkstücke voraus, was in vielen Fällen nur durch einen sehr hohen Aufwand in der Vorfertigung erreicht werden kann. Durch den Einsatz geeigneter Sensortechnik wird dieser Aufwand reduziert, wodurch trotzdem eine kostengünstige und qualitätsoptimale Bearbeitung bereitgestellt werden kann. Dabei kann die Sensoreinrichtung beispielsweise zum Erkennen und/oder zum Vermessen einer Geometrie wie eines Werkstückabschnittes, einer Schweißnaht oder eines kompletten Werkstücks ausgebildet sein, um eine optimale Positionierung der Robotervorrichtung bzw. des Effektors zu gewährleisten. Auch können mittels der Sensoreinrichtung je nach Anwendung komplexe Geometrien wie Naht- bzw. Spaltbreite, Nahtquerschnitt oder Öffnungswinkel ermittelt werden oder im Bereich des Handlings Bauteile lokalisiert werden.

Eine derartige herkömmliche Vorrichtung ist beispielweise in der Offenlegungsschrift EP 1 120 185 A1 in Form eines Roboters beschrieben, welcher als Effektor einen Brenner zum Plasmalöten oder Plasmaschweißen trägt. Bei der beschriebenen Ausführungsform ist ein Lasersensor seitlich zum Brenner am Roboter befestigt und wird gemeinsam mit dem Brenner bewegt, um die zu verbindenden Werkstücke im Bereich der Naht zu erfassen. Eine ähnliche Vorrichtung ist in der Patentschrift AT 406 244 B beschrieben, bei welcher der Effektor als thermisches Schneidwerkzeug ausgebildet ist und eine als Werkstückkantensensor dienende Laserkamera wiederum seitlich zum Effektor gehalten ist.

Bei der herkömmlichen Anordnung der Sensoreinrichtung, mit einem seitlich zum Effektor angeordnetem Sensorgehäuse, sind je nach spezifischer Anwendung häufig Beschränkungen in Bezug auf die mögliche relative Anordnung des Effektors zur Sensoreinrichtung oder auch Beschränkungen im Hinblick auf die vom Effektor anfahrbaren Positionen verbunden.

Der Erfindung liegt die Aufgabe zugrunde, derartige herkömmliche Robotervorrichtungen dahingehend weiterzubilden, dass die beschriebenen Nachteile üblicher Vorrichtungen zumindest teilweise behoben werden.

Überraschenderweise löst die Erfindung diese Aufgabe schon mit einer Robotervorrichtung mit den Merkmalen von Anspruch 1. Die erfindungsgemäße Robotervorrichtung zeichnet sich dadurch aus, dass die Sensoreinrichtung ein ringartiges Gehäuse mit einem Mittenloch aufweist, wobei sich der Effektor und/oder Effektormedien durch das Mittenloch des Sensorgehäuses hindurch erstreckt bzw. erstrecken.

Dadurch, dass sich das Sensorgehäuse umfänglich um den Effektor bzw. Effektormedien herum erstreckt, kann erreicht werden, dass die Sensoreinrichtung radial in direkter Nachbarschaft zum Effektor angeordnet ist, so dass die Bewegung des Effektors durch die Sensoreinrichtung kaum beeinträchtigt wird. Letztlich erhöht sich die Flexibilität bei der Bewegung des Effektors durch entsprechendes Ansteuern der Roboterantriebe.

Darüber hinaus bieten sich durch die umfängliche Anordnung des Sensorgehäuses um den Effektor bzw. Effektormedien herum neue Möglichkeiten zur relativen Anordnung beliebiger Abtasteinrichtungen wie Sender-/ Empfänger der Sensoreinrichtung. Die erfindungsgemäße Robotervorrichtung bietet insbesondere große Vorteile bei der Verwendung von ein- und zweidimensionalen Lasersensoren, welche nach dem Triangulationsprinzip arbeiten, bei welchem ein Laserstrahl von einem Sender abgegeben, von der zu vermessenden Oberfläche reflektiert und von einem Empfänger der Sensoreinrichtung erfasst und ausgewertet wird. Die erfindungsgemäße Vorrichtung ermöglicht letztlich Abtastgeometrien, welche bei herkömmlichen Robotervorrichtungen, insbesondere bezüglich Zugänglichkeit und Vermeidung von Störgrößen, nicht realisierbar sind.

Der Begriff "kinematische Kette" bezeichnet ein System aus einer Mehrzahl von insbesondere starren, aneinander gereihten Körpern, die durch Gelenke miteinander verbunden sind. Insofern umfasst die erfindungsgemäße Robotervorrichtung zumindest zwei, in der Regel zumindest drei Glieder, welche durch zumindest ein Gelenk gekoppelt sind. Ferner sei darauf hingewiesen, dass das ringartige Gehäuse der Sensoreinrichtung nicht geschlossen sein muss. Es reicht erfindungsgemäß aus, wenn sich das Gehäuse um mindestens 180 Grad, insbesondere um mindestens 270 Grad, noch zweckmäßiger um mindestens 315 Grad um den Effektor bzw. die Effektormedien herum erstreckt.

Mit dem Begriff Effektormedien sind beliebige Versorgungseinrichtungen, insbesondere Versorgungsleitungen zum Effektor bezeichnet. Je nach Ausführungsform können Effektormedien beispielsweise Strom- oder elektrische Steuerleitungen, oder auch Leitungen zum Führen beliebiger Fluide, wie beispielweise Wasser oder Öl als Kühlmediun oder Schutzgas umfassen.

Darüber hinaus ist festzustellen, dass das ringartige Sensorgehäuse erfindungsgemäß an seiner Außenmantelfläche nicht ideal kreisringförmig ausgebildet sein muss, sondern beispielsweise auch oval oder mehreckig sein kann. Dabei kann das Sensorgehäuse mit einem entsprechend ovalen bzw. mehreckigen oder auch mit einem kreisringförmigen Mittenloch ausgebildet sein.

Vorteilhafte Ausführungsformen der Erfindung sowie weitere erfindungswesentlichen Merkmale sind in den Unteransprüchen und in den nachfolgenden Erläuterungen angegeben.

Das ringartige Gehäuse der Sensoreinrichtung kann je nach Ausführungsform ringzylinderartig oder kegelstumpfartig ausgebildet sein.

Zweckmäßigerweise kann der eigentliche Sensor, umfassend beispielsweise einen Sender und/oder einen Empfänger, an einer Stirnseite des Gehäuses angebracht sein, welcher in Richtung zum Effektor weist. In besonderen Ausführungsformen der Erfindung und abhängig vom jeweiligen Sensor kann auch vorgesehen sein, dass ein Sensor respektive ein Sender und/oder ein Empfänger an einer äußeren Mantelfläche des Sensorgehäuses angeordnet ist bzw. sind.

Insbesondere kann die Sensoreinrichtung zumindest eine Sendeeinrichtung und zumindest eine ihr zugeordnete Empfängereinrichtung aufweisen, die jeweils an der dem Effektor zugewandten Stirnseite des Sensorgehäuses angeordnet sein können. Jeweils eine Sendeeinrichtung und eine ihr zugeordnete Empfängereinrichtung können durch ihr Zusammenwirken eine Messung in Bezug auf ein Werkstück ermöglichen. Beispielsweise können eine Sendeeinrichtung und eine ihr zugeordnete Empfängereinrichtung eine Abstandsmessung ermöglichen, etwa durch Triangulationsmessungen oder Laufzeitmessung. Beispielsweise können eine Sendeeinrichtung und eine ihr zugeordnete Empfängereinrichtung auch als Lichtquelle und Kamera ausgebildet sein, insbesondere als Lichtquelle und Videokamera, wodurch fortlaufend Aufnahmen von dem Werkstück, insbesondere eine Videoaufnahme von dem Werkstück mit Blickrichtung auf den Effektor-TCP (tool center point), gemacht werden können.

Insbesondere für Triangulationsmessungen kann es zweckmäßig sein, wenn eine Sendereinrichtung sowie eine diesbezügliche Empfängereinrichtung an der Stirnseite des Sensorgehäuses umfänglich beabstandet sind, insbesondere umfänglich um einen Winkel von größer 90 Grad, vorzugsweise größer 120 Grad, besonders vorzugsweise etwa 180 Grad beabstandet sind. Durch diese konstruktive Maßnahme kann die Beabstandung zwischen Sendereinrichtung und Empfängereinrichtung auf dem Sensorgehäuse maximiert werden, da sich das Sensorgehäuse um den Effektor bzw. Effektormedien herum erstreckt, was in spezifischen Anwendungen die Sensorerfassung verbessert. Beispielsweise kann durch eine entsprechende umfängliche Beabstandung von Sendeeinrichtung und zugeordneter Empfängereinrichtung eine höhere Messgenauigkeit in Bezug auf den gemessenen Abstand zu einem Werkstück mittels Laufzeitmessung gewährleistet sein, da durch die Beabstandung von Sendeeinrichtung und zugeordneter Empfängereinrichtung bei einer Variation des Abstands um einen bestimmten Betrag ein größerer Laufzeitunterschied messbar ist als bei einer herkömmlichen Sensoreinrichtung, bei der Sendeeinrichtung und Empfängereinrichtung unmittelbar nebeneinanderliegen. Außerdem können beispielsweise genauere Abstandsmessungen mittels Triangulationsmessung durchgeführt werden, da wegen der Beabstandung von Sendeeinrichtung und zugeordneter Empfängereinrichtung die Triangulationswinkel mit einer höheren Auflösung ermittelt werden können.

Durch die umfänglich beabstandete Anordnung von Sendeeinrichtung und zugeordneter Empfängereinrichtung ist somit gewährleistet, dass Messungen durch die Sensoreinrichtung mit hoher Präzision und Auflösung durchgeführt werden können. Darüber hinaus können durch die entsprechend mit voneinander beabstandete Sende- und Empfängereinrichtung Messungen, insbesondere Abstandsmessungen, bei einem hohen Abstand von zwischen Sensoreinheit und einem Werkstück durchgeführt werden. Dabei ist es insbesondere möglich, den Außendurchmesser der Sendeeinrichtung gering zu halten, da durch die umfängliche Beabstandung ein für eine präzise Messung ausreichender Abstand zwischen Sendeeinrichtung und Empfängereinrichtung gewährleistet sein kann. Der Begriff "umfänglich beabstandet" bezieht sich insbesondere darauf, dass die Gerade, die durch den Mittelpunkt der Sendeeinrichtung und den Mittelpunkt des Mittenlochs festgelegt ist, zu der Gerade, die durch den Mittelpunkt der Empfängereinrichtung und den Mittelpunkt des Mittenlochs festgelegt ist, einen Winkel mit einer Komponente senkrecht zur Drehachse der Endachse aufweist. Diese Winkelkomponente senkrecht zur Drehachse gibt insbesondere den umfänglichen Abstand an und kann vorzugsweise etwa 90°, insbesondere etwa 120°, insbesondere etwa 180° betragen.

Bei dem Vorsehen einer umfänglichen Beabstandung um 180° ist ein maximaler Abstand zwischen Sendeeinrichtung und Empfängereinrichtung erreichbar. Dadurch kann eine besonders gute Messgenauigkeit gewährleistet sein. Es kann jedoch auch vorteilhaft sein, einen umfänglichen Abstand von 90° zwischen Sendeeinrichtung und Empfängereinrichtung vorzusehen. Beispielsweise kann dadurch eine unabhängig von der Effektorgeometrie ungestörte Messung erreichbar sein. So kann beispielsweise ein Effektor, der sich in einer Richtung axial zur Drehachse durch das Mittenloch erstreckt, eine Messung durch eine Sensoreinrichtung umfassend 180° umfänglich voneinander beabstandete Sende- und Empfängereinrichtung behindern. Insbesondere kann es auch vorteilhaft sein, eine umfängliche Beabstandung von 120° zwischen Sendeeinrichtung und Empfängereinrichtung vorzusehen, beispielsweise kann dadurch möglicherweise ein sehr guter Kompromiss zwischen einer hohen Messgenauigkeit und einer störungsfreien Messung durch eine entsprechende Kombination von Sende- und Empfängereinrichtung gewährleistet sein.

In einer Ausführungsform weist die Sensoreinrichtung der Robotervorrichtung zumindest zwei Empfängereinrichtungen auf, die genau einer Sendeeinrichtung zugeordnet sind. Dadurch kann eine erste Messung über eine Kombination der Sendeeinrichtung mit der ersten ihr zugeordneten Empfängereinrichtung erfolgen und davon unabhängig eine zweite Messung über die Sendeeinrichtung und die zweite ihr zugeordnete Empfängereinrichtung. Dies kann insbesondere für Abstandsmessungen vorteilhaft sein, beispielsweise für Laufzeitmessungen oder Triangulationsmessungen. Denn dadurch können in zwei verschiedenen Bereichen an der Oberfläche eines zu bearbeitenden Werkstücks Abstandsmessungen vorgenommen werden: in einem ersten Bereich, der über die Sendeeinrichtung und die erste Empfängereinrichtung festgelegt ist, und in einem zweiten Bereich, der durch die Sendeeinrichtung und die zweite Empfängereinrichtung festgelegt ist. Dadurch kann beispielsweise gewährleistet sein, dass eine Robotervorrichtung bzw. ein Effektor einer Robotervorrichtung in eine Suchrichtung bewegt wird, die senkrecht auf einer ersten Gerade steht, die durch den Mittelpunkt der Sendeeinrichtung und den Mittelpunkt der ersten Empfängereinrichtung festgelegt ist, wobei fortlaufend Abstandsmessungen durchgeführt werden können. Ohne dass eine Drehung des Effektors und/oder des Sensorgehäuses notwendig wäre, können bei einer entsprechenden Einrichtung auch entlang einer zweiten Suchrichtung, die senkrecht auf einer zweiten Gerade steht, die durch den Mittelpunkt der Sendeeinrichtung und den Mittelpunkt der zweiten Empfängereinrichtung festgelegt ist, fortlaufend Abstandsmessungen durchgeführt werden. Bei einer entsprechenden Einrichtung kann der Effektor somit in die beiden genannten Suchrichtungen bewegt werden, wobei fortlaufend Abstandsmessungen durchgeführt werden können, ohne dass eine Drehung des Sensorgehäuses notwendig ist. Dies ermöglicht insbesondere eine Einsparung der Taktzeit bei dem Einsatz einer entsprechenden Robotervorrichtung, da der Effektor zum Suchen einer bestimmten Stelle an einem Werkstück in zwei verschiedene Suchrichtungen bewegt werden kann, während Abstandsmessungen durchgeführt werden können, ohne dass eine Drehung des Sensorgehäuses erforderlich ist.

Beispielsweise können jeweils die Sendeeinrichtung und eine der beiden ihr zugeordneten Empfängereinrichtungen umfänglich um zumindest 90°, insbesondere um 120°, insbesondere um 180° beabstandet sein. Insbesondere kann es vorteilhaft sein, dass die Sendeeinrichtung sowohl zu der ersten Empfängereinrichtung als auch zu der zweiten Empfängereinrichtung um 90° umfänglich beabstandet ist, so dass die beiden Empfängereinrichtungen um 180° voneinander beabstandet sind. Dadurch können zwei wie oben beschriebene Suchrichtungen mit einem Winkel von 90° zueinander gewährleistet sein, wodurch eine besonders gute Abdeckung der Oberfläche eines Objektes durch Abstandsmessungen erreicht werden kann, ohne dass eine Drehung des Sensorgehäuses erforderlich ist.

In einer Ausführungsform ist die Sendeeinrichtung in einem Drehsinn zwischen den ihr zugeordneten Empfängereinrichtungen angeordnet. Insbesondere kann diese Sendeeinrichtung umfänglich mittig zwischen zwei ihr zugeordneten Empfängereinrichtungen angeordnet sein. Die Anordnung der Sendeeinrichtung in einem Drehsinn zwischen den ihr zugeordneten Empfängereinrichtungen bedeutet, dass der umfängliche Abstand der Sendeeinrichtung zu einer ersten Empfängereinrichtung, zu der sie in einem ersten Drehsinn um die Achse der Endachse benachbart ist, und der umfängliche Abstand der Sendereinrichtung zu einer zweiten Empfängereinrichtung, zu der sie im zweiten Drehsinn um die Achse der Endachse benachbart ist, jeweils nicht größer sind als der umfängliche Abstand von erster und zweiter Empfängereinrichtung zueinander. Die umfänglich mittige Anordnung der Sensoreinrichtung zu zwei Empfängereinrichtungen bedeutet, dass der umfängliche Abstand zwischen Sendeeinrichtung und erster Empfängereinrichtung dem umfänglichen Abstand zwischen Sendeeinrichtung und zweiter Empfängereinrichtung entspricht, wobei die Sendeeinrichtung in einem Drehsinn zwischen den beiden Empfängereinrichtungen angeordnet ist.

Insbesondere kann es vorteilhaft sein, dass die Abmessung des Außendurchmessers des ringartigen Gehäuses der Sensoreinrichtung höchstens der Abmessung des Außendurchmessers der Endachse gleichkommt. Dies bringt den Vorteil mit sich, dass die Sensoreinrichtung das Anfahren von Werkstücken mit dem Effektor nicht behindert, da sie nicht über die Endachse herausragt. Die Erfindung gewährleistet, dass selbst bei dem Vorsehen einer entsprechend kleinen Sensoreinrichtung, bei der die Abmessung des Außendurchmessers des ringartigen Gehäuses nicht über die Endachse herausragt, eine hohe Messgenauigkeit der Sensoreinrichtung gewährleistet sein kann. Insbesondere kann es vorteilhaft sein, dass das Gehäuse der Sensoreinrichtung bündig mit dem äußeren Rand der Endachse abschließt. Insbesondere kann die Endachse als Hohlwelle ausgeführt sein, auf der umfänglich bündig das ringartige Gehäuse der Sensoreinrichtung angeordnet ist.

In einer besonders vorteilhaften Ausführungsform kann auch vorgesehen sein, dass die relative umfängliche Lage der Sendereinrichtung und der Empfängereinrichtung veränderbar ist, derartig, dass beide Einrichtungen umfänglich zueinander bewegbar gestaltet sind, so dass beispielsweise Triangulationsmessungen durchführbar sind unter einem einstellbaren Triangulationswinkel, insbesondere bei konstant gehaltenem Abstand zum Werkstück.

Die relative Anordnung des Sensorgehäuses mit daran angebrachtem bzw. davon aufgenommenem Sensor, insbesondere einer Sendereinrichtung und/oder einer Empfängereinrichtung, zum Effektor, kann je nach spezifischer Anwendung optimiert werden. Dabei kann es zweckmäßig sein, wenn das Sensorgehäuse mit der den Effektor tragenden Endachse der Robotervorrichtung im Betrieb starr verbunden ist und somit zusammen mit dem Effektor bewegt wird.

Ferner kann auch vorgesehen sein, dass das Sensorgehäuse mit der den Effektor tragenden Endachse der Robotervorrichtung lösbar verbunden ist, beispielsweise mittels einer lösbaren Kupplung. Bei letztgenannter Ausführungsform wird nach dem Kuppeln des Sensorgehäuses an die den Effektor tragenden Endachse der Robotervorrichtung bzw. an den Effektor das Sensorgehäuse von der Endachse mitgeführt.

Zweckmäßigerweise ist der Effektor mit der diesen tragenden Endachse der Robotervorrichtung, d.h. mit dem dieser Endachse zugeordnetem Dreharm, starr gekoppelt.

Zweckmäßigerweise kann die Sensoreinrichtung zumindest abschnittsweise, insbesondere das Sensorgehäuse, oder andere Teile der Sensoreinrichtung wie ein Sender und/oder ein Empfänger zur Endachse der Robotervorrichtung bzw. zum Effektor bewegbar gelagert sein. Durch diese konstruktive Maßnahme werden die Möglichkeiten zur Messwerterfassung stark verbessert. Dabei sei darauf hingewiesen, dass die Angabe, das Sensorgehäuse ist drehbar zur Endachse der Robotervorrichtung bzw. zum Effektor gelagert auch solche erfindungsgemä-βen Ausführungsformen umfasst, bei welchen nur ein Teilabschnitt des Sensorgehäuses zur Endachse der Robotervorrichtung bzw. zum Effektor bewegbar gelagert ist.

Insbesondere kann es zweckmäßig sein, wenn das Sensorgehäuse drehbar zur Endachse der Robotervorrichtung bzw. zum Effektor gelagert ist, wobei die Drehachse des Sensorgehäuses und die Enddrehachse der Robotervorrichtung parallel zueinander oder geringfügig zueinander verkippt, insbesondere um einen Winkel von ca. 0 bis ±15 Grad angeordnet sind. Durch diese konstruktive Maßnahme kann erreicht werden, dass unterschiedliche Messpunkte durch eine einfache Drehung des Sensorgehäuses einstellbar sind. Ferner sind unterschiedlich zum TCP (tool center point) des Effektors, welcher in erster Näherung mit dem Wirkbereich des Effektors wie einer Brennerspitze zusammenfällt, beabstandete Messpunkte der Sensoreinrichtung einstellbar.

Eine noch höhere Flexibilität bei der relativen Anordnung von Sensoreinrichtung und Effektor während des Betriebes der Robotereinrichtung kann dadurch erreicht werden, dass das Sensorgehäuse zur Endachse der Robotervorrichtung bzw. zum Effektor um eine Achse kippbar angeordnet ist, welche etwa senkrecht zur Längsachse des Sensorgehäuses verläuft. Zweckmäßigerweise kann der Kippwinkelbereich etwa ± 20 Grad, vorzugsweise ± 10 Grad betragen. Um eine solche Kippung bereitzustellen, kann vorgesehen sein, ein entsprechendes Spiel zwischen der inneren Begrenzungsfläche des Mittenlochs des Sensorgehäuses und dem hindurchgeführten Effektor bzw. den hindurchgeführten Effektormedien vorzusehen. Diese konstruktive Maßnahme ermöglicht eine starke Vergrößerung des "Gesichtsfeldes" des Sensors, beispielsweise kann damit der Abtastbereich des Sensors erhöht werden.

Um einen Schutz der am bzw. im Sensorgehäuse angeordneten Sensoreinrichtung, wie einer Sende- und/oder einer Empfängereinrichtung zu gewährleisten, kann vorgesehen sein, dass an der dem Effektor zugewandten Stirnseite des Sensorgehäuses ein bewegbarer Abdeckring vorgesehen ist, zum Abdecken bzw. Freigeben einer Sensoreinrichtung. Dabei kann der Abdeckring insbesondere drehbar, verschiebbar und/oder klappbar gelagert sein.

Soweit das Sensorgehäuse relativ zum Effektor bewegbar angeordnet ist, kann es zweckmäßig sein, wenn diese Bewegung über einer steuerbaren Vorrichtung wie eines Motors oder einer anderen Vorrichtung, z.B. einer pneumatischen Kippvorrichtung zum Kippen des Sensorgehäuses realisiert ist. Vorteilhafterweise ist dabei die Robotersteuerung so ausgebildet, dass diese auch die relative Bewegung von Sensorgehäuse und Effektor zueinander steuert. Gleicherweise ist es vorteilhaft, wenn auch der Abdeckring zum Abdecken bzw. Freigeben einer Sensoreinrichtung steuerbar, insbesondere über eine zentrale Robotersteuerung, ausgebildet ist.

Bei einer besonderen Ausführungsform ist die Endachse der erfindungsgemäßen Robotervorrichtung als Hohlachse ausgebildet, so dass der Effektor bzw. die Effektormedien sich durch diese Hohlachse hindurch erstrecken. Bei dieser Ausführungsform kann das ringartige Sensorgehäuse stirnseitig an der Hohlwelle der Robotereinrichtung angeschlossen sein, so dass sich der Effektor bzw. die Effektormedien sowohl durch die besagte Hohlachse des Roboters als auch durch den Mittenabschnitt bzw. das Mittenloch des Sensorgehäuses hindurch erstrecken.

Vorteilhafterweise kann eine Medienversorgung der Sensoreinrichtung, wie beispielsweise eine elektrische Versorgung und/oder eine Kühlmittelversorgung, zusammen mit der Medienversorgung des Effektors in einer gemeinsamen Führungseinrichtung verlaufen. Eine solche Führungseinrichtung kann beispielsweise in Form eines Versorgungsschlauchs oder einer Energieführungskette ausgebildet sein.

In einer Ausführungsform umfasst die Sensoreinrichtung eine Kollisionsbox, die eine Abschaltautomatik zum Deaktivieren des Effektors bei einem vorgegebenen mechanischen Kontakt des Effektors mit einem Werkstück aufweist. Die Kollisionsbox kann dabei innerhalb des Sensorgehäuses angeordnet sein. Dadurch, dass die Sensoreinrichtung die Kollisionsbox umfasst, kann eine besonders kompakte und kostengünstige Realisierung einer Robotervorrichtung mit einer Kollisionsbox ermöglicht sein.

Eine Kollisionsbox als solche ist in der Robotertechnik weithin bekannt. Eine Kollisionsbox ist üblicherweise ein separates Bauelement, das an dem Effektor und der Endachse, insbesondere an der Endachse zwischen Endachse und Effektor angeordnet ist. Der Effektor ist mit der Kollisionsbox verbunden, wobei eine mechanische Belastung des Effektors, wie beispielsweise ein mechanischer Kontakt des Effektors mit einem Werkstück, durch die Kollisionsbox registriert wird, wonach die Kollisionsbox den Effektor deaktiviert, um Schäden am Werkstück und am Effektor zu vermeiden.

Rein schematisch kann in einer Ausführungsform die Kollisionsbox durch zwei Elemente realisiert sein, wobei das erste Element fest mit der Endachse verbunden ist und elastische Verbindungselemente aufweist, mit denen es mit dem zweiten Element verbunden ist, wobei das zweite Element und das erste Element axial in Bezug auf die Drehachse voneinander beabstandet sind. Das zweite Element ist mit dem Effektor verbunden.

In einer Ausführungsform sind die zwei Elemente als zwei Scheiben mit Mittenloch ausgebildet. Bei einer Bewegung der Endachse wird die mit ihr festverbundene erste Scheibe mitbewegt und gleichfalls die mit der ersten Scheibe elastisch verbundene zweite Scheibe, so dass auch der Effektor mitbewegt wird. Bei einem mechanischen Kontakt mit einem Werkstück übt der Effektor eine Kraft auf die zweite Scheibe aus, so dass der Abstand zwischen zweiter Scheibe und erster Scheibe über die elastischen Verbindungselemente über die Erstreckung der Scheiben hinweg unterschiedlich verändert wird. Eine solche Veränderung des Abstands zwischen erster Scheibe und zweiter Scheibe kann in der Kollisionsbox detektiert werden und ein Deaktivieren des Effektors auslösen. In dem genannten Ausführungsbeispiel ist die Kollisionsbox in dem Sensorgehäuse integriert. Bei der beschriebenen schematischen Darstellung der Kollisionsbox umfassend erste Scheibe und zweite Scheibe, wobei die erste Scheibe fest mit der Endachse verbunden ist und die zweite Scheibe fest mit dem Effektor, sind erste und zweite Scheibe von der Sensoreinrichtung umfasst. Beispielsweise kann die zweite Scheibe sowohl mit dem Sensorgehäuse als auch mit dem Effektor fest verbunden sein, wohingegen die erste Scheibe mit der Endachse fest verbunden ist, wobei Sensorgehäuse und zweite Scheibe und Effektor zumindest geringfügig elastisch mit der ersten Scheibe und damit Endachse verbunden sind. Beispielsweise kann auch das Sensorgehäuse fest mit der ersten Scheibe und der Endachse verbunden sein, wohingegen die zweite Scheibe mit dem Effektor verbunden ist und geringfügig elastisch zu erster Scheibe, Endachse und Sensorgehäuse auslenkbar ist. Statt der Scheiben können auch andere Elemente entsprechend verwendet werden. Insbesondere kann der Fachmann bei der Ausgestaltung der Kollisionsbox auf sein Fachwissen bezüglich herkömmlicher, bekannter Kollisionsboxen zurückgreifen.

Die erfindungsgemäße Aufgabe wird ferner durch eine vorstehend beschriebene Sensoreinrichtung mit ringartigem Gehäuse umfassend ein Mittenloch gelöst, die als Sensoreinrichtung in der obenstehend beschriebene erfindungsgemäße Robotervorrichtung einsetzbar ist. Eine solche Sensoreinrichtung kann insbesondere genutzt werden, um eine herkömmliche Robotervorrichtung in eine erfindungsgemäß ausgebildete Vorrichtung abzuwandeln.

Die Erfindung wird im Folgenden durch das Beschreiben einiger Ausführungsformen unter Bezugnahme auf die beiliegenden Zeichnungen erläutert, wobei
- **Figur 1**: in einer perspektivischen Ansicht einen erfindungsgemäß ausgebildeten Knickarmroboterarm 1 mit einer Sensoreinrichtung 100,
- **Figur 2a**: den Sensor 100 gemäß Figur 1 in einer perspektivischen Ansicht,
- **Figur 2b**: den Sensor 100 gemäß Figur 1 in einer Aufsicht,
- **Figur 3a**: eine perspektivische Teilansicht einer erfindungsgemäßen Robotervorrichtung umfassend einen Sensor 100 nach Fig. 3b,
- **Figur 3b**: den Sensor 100 einer weiteren erfindungsgemäßen Ausführungsform in einer perspektivischen Ansicht,
- **Figur 4a**: eine perspektivische Teilansicht des in Figur 1 dargestellten Knickarmroboters 1,
- **Figur 4b**: den in Figur 4a dargestellten Handabschnitt des Knickarmroboters 1 in einer Aufsicht,
- **Figur 4c**: den in Figur 4a dargestellten Handabschnitt des Knickarmroboters 1 in einer Seitenansicht,
- **Figur 5a**: eine zweite Ausführungsform einer erfindungsgemäßen Robotervorrichtung (1) in einer perspektivischen Teilansicht ähnlich wie Fig. 1,
- **Figur 5b**: die in Figur 5a abschnittsweise dargestellte Robotervorrichtung (1) in einer Aufsicht,
- **Figur 5c**: die in Figur 5a abschnittsweise dargestellte Robotervorrichtung (1) in einer Seitenansicht,
- **Figur 6a**: eine schematische Teilansicht einer weiteren Ausführungsform einer erfindungsgemäßen Robotervorrichtung und
- **Figur 6b**: eine schematische Teilansicht einer weiteren Ausführungsform einer erfindungsgemäßen Robotervorrichtung
zeigt.

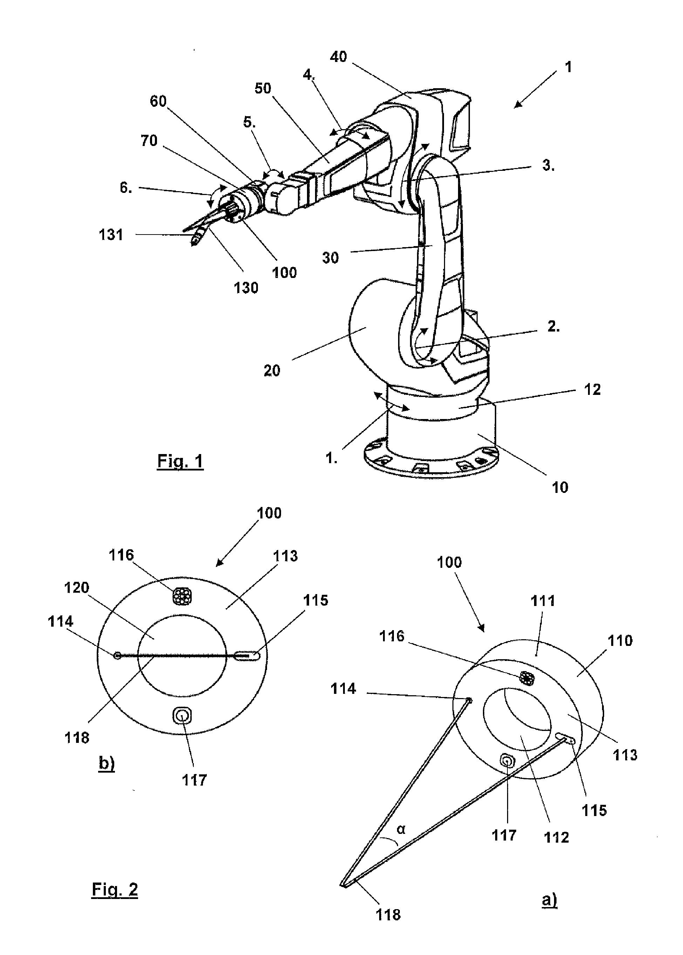

Figur 1 zeigt einen erfindungsgemäßen ausgebildeten Knickarmroboter, der in der dargestellten Ausführungsform zum Tragen eines Brenners 130 ausgebildet ist. Der Roboter 1 ist beispielsweise zum Schweißen von Blechteilen in der Automobilindustrie geeignet. Er weist einen zylindrischen, feststehenden Robotersockel 10 auf, an dem sich die erste Drehachse (1.) in Form eines Dreharms 12 abstützt. Feststehend mit dem Dreharm 12 ist ein Winkelfuß 20 angeordnet, an dem zur Festlegung der zweiten Roboterachse (2.) ein Schwenkarm 30 drehbar angebracht ist. Am äußeren Ende des Schwenkarms 30 ist ein Schwenkteil 40 zur Festlegung der dritten Roboterachse (3.) drehbar angebracht. In der dargestellten erfindungsgemäßen Ausführungsform eines Roboters verlaufen die zweite und dritte Roboterachse parallel zueinander. Dabei ist das Schwenkteil 40 seitlich an dem Schwenkarm 30 angebracht. Das Schwenkteil 40 erstreckt sich in einen Dreharm 50 zur Festlegung der vierten Roboterachse (4.), die in dem angegebenen Beispiel senkrecht zu der durch die erste und zweite bzw. dritte Roboterachse definierte Ebene verläuft. Am äußersten Ende des Dreharms 50 schließt sich zur Bereitstellung der fünften Roboterachse (5.) ein Schwenkgelenk 60 an. Endseitig zum sechsarmigen Knickarmroboter schließt sich zur Bereitstellung der sechsten Roboterachse (6.) ein weiterer Dreharm 70 an, bei welchem die Drehachse wie bei dem Dreharm 50 parallel zum Arm verläuft.

In der beschriebenen ersten Ausführungsform ist der Dreharm 70 als Hohlwelle ausgebildet, durch welchen sich der Brenner 130 hindurcherstreckt, er ragt mit seinen Brennerkopf 131 aus der Hohlwelle 70 hervor. Erfindungsgemäß umfasst der Roboter 1 eine stirnseitig zum Dreharm 70 der letzten Drehachse angeordnete Sensoreinrichtung 100, welche ein ringartiges, hier zylinderringförmiges Gehäuse mit einem Mittenloch aufweist, durch das sich der Brenner 130 zumindest mit seinem Brennerkopf 131 hindurch erstreckt.

Die angegebenen Achsen des erfindungsgemäßen Roboters sind alle motorisch betrieben und werden durch eine zentrale Robotersteuerung angesteuert.

Der spezifische geometrische Aufbau der Sensoreinrichtung 100 geht aus den Figuren 2a, 2b hervor. In der beschriebenen Ausführungsform weist der Sensor 100 ein kreisringzylindrisches Gehäuse 110 auf mit einem zentrischen Mittenloch 120, durch das der Brenner 130 hindurchführbar ist, siehe Figur 1. Das Sensorgehäuse 110 umfasst eine zylindrische Außenmantelfläche 111 sowie eine, das Mittenloch festlegende zylindrische Innenmantelfläche 112. An der Stirnseite 113, welche im eingebauten Zustand dem Effektor zugewandt ist, ist umfänglich beabstandet eine LED-Einrichtung 116 zur Bereitstellung einer Beleuchtungsquelle, eine Videokamera 117, eine Laserquelle 114 in Form einer Laserdiode sowie ein lichtempfindlicher Empfänger 115 angeordnet. Dabei ist die Lasereinrichtung 114 zur Aussendung eines Laserstrahls 118 sowie der Fotoempfänger 115 zum Empfang dieses beispielesweise an einem Werkstück reflektierten oder gestreuten Laserstrahls zur Durchführung einer Triangulationsmessung ausgebildet. In der beschriebenen Ausführungsform sind die angegebenen optischen Einrichtungen fest an der Stirnseite des Sensorgehäuses angebracht, d.h. deren umfängliche relative Lage liegt fest.

In einer nicht dargestellten Ausführungsform kann auch vorgesehen sein, zumindest einzelne dieser Einrichtungen, insbesondere die Sensormittel 114, 115 umfänglich zueinander beweglich anzuordnen, so dass beispielsweise unter unterschiedlichen Triangulationswinkeln α gemessen werden kann. Bei dieser Ausführungsform kann mit einer Abfolge von Messungen in unterschiedliche Richtungen gestreutes Licht erfasst werden, wenn beispielsweise der Empfänger 115 relativ zum Sender 114 auf bzw. in der ringförmigen Stirnseite des Gehäuses bewegt wird.

Je nach Anwendung kann eine Vielzahl von Sensormitteln für die Sensoreinrichtung 100 verwendet werden, wie beispielsweise eine schon erwähnte Lasereinrichtung zur Durchführung einer Triangulationmessung, ein kapazitiver Sensor, ein Ultraschallsensor, ein Röntgensensor, eine CCD-Kamera etc. Bei optischen Sensoren kann der Fotosensor auf der Basis unterschiedlicher Techniken realisiert sein, beispielsweise in Form eines CMOS-, CCD-, oder PSD-Empfängers. Derartige Einrichtungen können einerseits auf dem Sensorgehäuse 110, siehe Figur 2a, insbesondere an der dem Effektor zugewandten Stirnseite des Sensorgehäuses angeordnet sein. Es ist jedoch auch möglich, die Einrichtungen innerhalb des Sensorgehäuses 110 zu platzieren, wobei eine jeweilige Öffnung im Gehäuse vorgesehen sein kann, insbesondere an der besagten Stirnseite 113, beispielsweise zum Hindurchführen von vom Sensor 100 ausgesandten Messlicht bzw. vom Werkstück gestreutes oder reflektiertes Licht.

Die Versorgung der besagten Einrichtungen kann in der beschriebenen Ausführungsform an der Rückseite des Sensorgehäuses erfolgen, welche der Stirnseite 113 gegenüberliegt. Diese Versorgung kann beispielsweise eine Zuführung von elektrischer Energie zum Betrieb der jeweiligen Einrichtungen, Steuerleitungen oder aber auch Kühleinrichtungen, wie eine Kühlleitung, eine Luftkühlungseinrichtung oder auch eine elektrische Kühlungseinrichtung, beispielsweise in Form eines Peltierelements umfassen. Dabei können insbesondere derartige Kühleinrichtungen oder andere Versorgungseinrichtungen auch innerhalb des Sensorgehäuses 110 angeordnet sein. Deren Anbindung an eine entsprechende Betriebsstruktur kann über die rückseitige Stirnfläche des Sensorgehäuses 110 erfolgen. Ebenso kann die Versorgung über das Mittenloch 120 erfolgen. Beispielsweise können in dem Mittenloch 120 entsprechende Versorgungsanschlüsse vorgesehen sein.

Je nach spezifischer Ausführung, kann auch die Elektronik zur Signalauswertung bzw. zur Steuerung der Sensoren innerhalb des Sensorgehäuses 110 angeordnet sein, wobei diese Elektronik beispielsweise durch eine zentrale Steuerung, wie die Robotersteuerung, angesteuert sein kann.

Die Signalübertragung von der Sensoreinrichtung an eine weiterverarbeitete Steuerung, wie die zentrale Robotersteuerung, kann in vielfältiger Weise erfolgen, beispielsweise analog, seriell, digital, insbesondere über eine Luftschnittstelle wie eine Funkverbindung, eine WLAN-Verbindung oder eine optische Verbindung.

Die Stromversorgung kann bei der Sensoreinrichtung 100 mittels einer Drahtverbindung, jedoch in anderen Ausführungsformen auch über Schleifringe erfolgen.

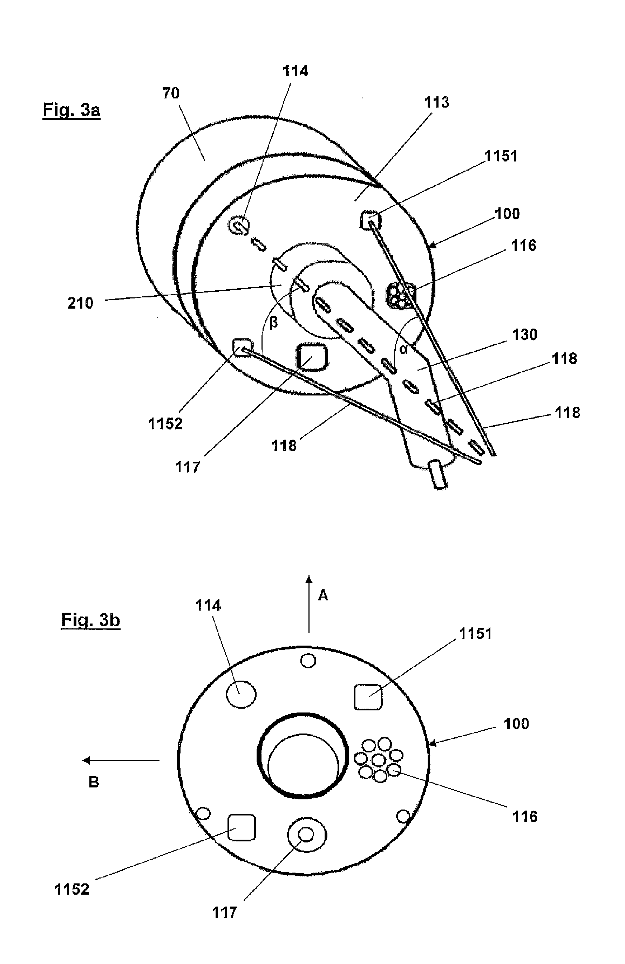

In den Figuren 3a, 3b ist der spezifische geometrische Aufbau der Sensoreinrichtung 100 einer weiteren erfindungsgemäßen Ausführungsform einer Robotervorrichtung dargestellt. Die Sensoreinrichtung 100 stimmt weitestgehend mit der Sensoreinrichtung 100 aus den Figuren 2a, 2b überein, wobei dieselben Bezugszeichen zumindest ähnliche Bauteile bezeichnen. Die Sensoreinrichtung 100 nach Fig. 3a, 3b unterscheidet sich von der Sensoreinrichtung gemäß den Figuren 2a, 2b jedoch dadurch, dass in der Sensoreinrichtung 100 nach Fig. 3a, 3b der Sendeeinrichtung, die als Laserquelle 114 ausgebildet ist, zwei Empfängereinrichtungen zugeordnet sind, die als zwei Fotoempfänger 1151, 1152 ausgebildet sind. In Fig. 3a ist die Sensoreinheit 100 in ihrer Montageposition an einer erfindungsgemäßen Robotervorrichtung dargestellt. Die Sensoreinheit 100 wird von dem Dreharm 70 getragen, und an der Sensoreinheit 100 ist ein Brenner 130 mittels einer Brenner-Überwurfmutter 210 verschraubt.

Die Laserquelle 114 ist jeweils um 90° umfänglich beabstandet zu den beiden Fotoempfängern 1151, 1152 angeordnet, wobei die Laserquelle 114 in einem Drehsinn zwischen den beiden ihr zugeordneten Fotoempfängern 1151, 1152 mittig angeordnet ist. Die Fotoempfänger 1151 und 1152 sind somit um 180° umfänglich voneinander beabstandet. Die Gerade, die durch den Mittelpunkt der Laserquelle 114 und den Mittelpunkt des ersten Fotoempfängers 1151 festgelegt ist, weist einen Winkel von 90° senkrecht zur Drehachse in Bezug auf die Gerade auf, die durch den Mittelpunkt der Laserquelle 114 und den Mittelpunkte des zweiten Fotoempfängers 1152 festgelegt ist.

In Fig. 3a ist der Laserstrahl 118, der durch die Laserquelle 114 der Sensoreinrichtung 100 emittiert werden kann, gestrichelt dargestellt. Jeweils ein Laserstrahl 118, der nach einer Reflektion des von der Laserquelle 114 emittierten Lichtstrahls an einem Werkstück zu einem Fotoempfänger 1151, 1152 zurückgesandt wird, ist mit durchgezogener Linie dargestellt. Aus Fig. 3a ist ersichtlich, dass mit einer entsprechenden Ausführungsform umfassend eine Sendeeinrichtung 114 und zwei ihr entsprechend zugeordnete Empfängereinrichtungen 1151, 1152 zwei unabhängige Abstandsmessungen durchgeführt werden können.

In Fig. 3a sind beispielhaft die Verläufe von Laserstrahlen 118 für Abstandsmessungen mittels Triangulationsmessung unter Verwendung der Laserquelle 114 und des ersten Fotoempfängers 1151 sowie des zweiten Fotoempfängers 1152 der beschriebenen Ausführungsform dargestellt.

Bei der ersten Abstandsmessung wird der Abstand zwischen der Sensoreinrichtung 100 und einem Werkstück aus dem festgelegten und bekannten Abstand zwischen der Laserquelle 114 und dem ersten Fotoempfänger 1151, der Ausrichtung der Laserquelle 114 zu dem ersten Fotoempfänger 1151, der Abstrahlrichtung, mit der die Laserquelle 114 den Laserstrahl 118 auf das Werkstück emittiert und die sich aus dem Winkel, mit dem die Laserquelle 114 den Laserstrahl 118 relativ zur Ausrichtung der Laserquelle 114 zum ersten Fotoempfänger 1151 aussendet, ergibt, und dem Triangulationswinkel α, der den Winkel zwischen dem Laserstrahl 118 angibt, der von der Laserquelle emittiert wird, und dem Laserstrahl 118, der von dem Werkstück zu dem zweiten Fotoempfänger 1151 zurückemittiert wird, ermittelt. Der Triangulationswinkel α wird durch den ersten Fotoempfänger 1151 dadurch ermittelt, dass der Fotoempfänger 1151 detektiert, an welcher Stelle seiner Oberfläche der zurückreflektierte Laserstrahl 118 auftrifft.

Bei der zweiten Abstandsmessung wird der Abstand zwischen Sensoreinrichtung 100 und Werkstück anhand des bekannten Abstands zwischen der Laserquelle 114 und dem zweiten Fotoempfänger 1152, der bekannten Abstrahlrichtung, mit der die Laserquelle 114 den Laserstrahl 118 auf das Werkstück emittiert, der Ausrichtung von Laserquelle 114 zu zweitem Fotoempfänger 1152 und dem Triangulationswinkel β, der den Winkel zwischen dem Laserstrahl 118 angibt, der von der Laserquelle emittiert wird und dem Laserstrahl 118, der von dem Werkstück zu dem zweiten Fotoempfänger 1152 zurückemittiert wird, berechnet.

Allgemein ist für die Durchführung der Triangulationsmessung erforderlich, dass die Abstrahlrichtung bekannt ist, unter der die Sendeeinheit ein Signal aussendet, wobei hierzu der Winkel der Abstrahlrichtung zur Ausrichtung von Sendeeinheit zu zugeordneter Empfängereinheit relevant ist. Insbesondere kann es bei einer solchen Sensoreinheit, bei der einer Sendeeinheit zwei Empfängereinheiten zugeordnet sind, wobei die Sendeeinheit umfänglich mittig zwischen den Empfängereinheiten angeordnet ist, vorteilhaft sein, wenn der Winkel, mit dem ein Signal von der Sendeeinheit im Hinblick auf die Ausrichtung von Sendeeinheit zur ersten Empfängereinheit emittiert wird, genauso groß ist wie der Winkel, mit dem das Signal zur Ausrichtung von der Sendeeinheit zur zweiten Empfängereinheit emittiert wird. Im vorliegenden Ausführungsbeispiel liegen sowohl die Laserquelle 114 als auch die beiden Fotoempfänger 1151 und 1152 in einer Ebene, die durch die Stirnseite 113 festgelegt ist. Die Ausrichtungen der Laserquelle 114 sowie der beiden Fotoempfänger 1151, 1152 weisen jeweils senkrecht von der durch die Stirnseite 113 vorgegebenen Ebene weg. Die Laserquelle 114 ist umfänglich mittig zwischen erstem und zweitem Empfänger 1151, 1152 angeordnet. Im vorliegenden Ausführungsbeispiel emittiert die Laserquelle 114 einen Laserstrahl unter einem Winkel von 90° zu der Ebene, die durch die Stirnseite 113 festgelegt ist. Der Winkel des Laserstrahls 118, der von der Laserquelle 114 emittiert wird, ist im Hinblick auf die Ausrichtung der Laserquelle 114 zum ersten Fotoempfänger 1151 identisch mit dem Winkel im Hinblick zu der Ausrichtung der Laserquelle 114 und dem zweiten Fotoempfänger 1152. Dadurch ist für beide Fotoempfänger 1151, 1152 die Sichtbarkeit eines von einem Werkstück zurückemittierten Laserstrahls 118 in demselben Abstandsbereich der Sensoreinheit 100 zu einem Werkstück gewährleistet. Somit können durch die Laserquelle 114 und den ersten Fotoempfänger 1151 Abstandsmessungen in demselben Abstandsbereich der Sensoreinheit 100 zum Werkstück durchgeführt werden wie mit der Laserquelle 114 und dem zweiten Fotoempfänger 1152.

In Fig. 3b ist die Sensoreinheit gemäß Fig. 3a unabhängig von der Robotervorrichtung dargestellt. Gleiche Bauteile sind mit identischen Bezugszeichen bezeichnet. In Fig. 3b sind die Suchrichtungen A, B, vorgegeben, entlang derer eine erfindungsgemäße Robotervorrichtung gemäß dem in den Figuren 3a, 3b dargestellten Ausführungsbeispiel Abstandsmessungen zur Suche des an einem Werkstück zu bearbeitenden Ortes durchführen kann. Dabei ist zu berücksichtigen, dass mit der Laserquelle 114 und einem der Fotoempfänger 1151, 1152 Abstandsmessungen in einem Bereich auf einem Werkstück durchgeführt werden können, der entsprechend auf dem Werkstück zwischen der Laserquelle 114 und dem entsprechenden Fotoempfänger 1151, 1152 liegt. Sowohl in der Suchrichtung A als auch in der Suchrichtung B können bei einer entsprechenden Bewegung der Sensoreinheit 100 in Richtung A bzw. in Richtung B fortlaufend Abstandsmessungen von der Sensoreinheit 100 zu einem zu bearbeitenden Werkstück durchgeführt werden. Entsprechend kann bei einer Suche eines bestimmten Ortes auf einem Werkstück eine Abstandsmessung zunächst in der Suchrichtung A und dann in der Suchrichtung B durchgeführt werden, ohne dass ein Drehen der Sensoreinheit 100 erforderlich ist. Dadurch kann bei dem Einsatz einer entsprechenden Robotervorrichtung umfassend eine erfindungsgemäße Sensoreinheit 100 eine geringere Taktzeit gewährleistet sein, da bei der Suche nach dem zu bearbeitenden Ort zwei verschiedene Suchrichtungen angefahren werden können, ohne dass ein Einstellen der Sensoreinrichtung 100 über ein Drehen der Sensoreinrichtung 100 erforderlich ist.

In einem weiteren Anwendungsbeispiel einer erfindungsgemäßen Robotervorrichtung umfassend eine Sensoreinheit 100 nach den Figuren 3a, 3b können Abstandsmessungen über das Zusammenwirken der Laserquelle 114 mit dem ersten Fotoempfänger 1151 gleichzeitig zu Abstandsmessungen über das Zusammenwirken der Laserquelle 114 mit dem zweiten Fotoempfänger 1152 durchgeführt werden. Dadurch kann beispielsweise auch ein Kippwinkel der Sensoreinheit 100 zu der Oberfläche eines Werkstücks ermittelt und eingestellt werden. Durch die in den gezeigten Ausführungsbeispielen dargestellte umfängliche Beanstandung zwischen Laserquelle 114 und Fotoempfänger 115, 1151, 1152 kann eine Abstandsmessung mit hoher Präzision gewährleistet sein. Insbesondere ist eine Abstandsmessung bei großem Abstand zwischen Sensoreinrichtung 100 und einem Werkstück möglich. Bei den vorliegenden Ausführungsbeispielen einer erfindungsgemäßen Robotervorrichtung kann ein entsprechender Abstand von ca. 30 cm bis 70 cm, insbesondere von 50 cm vorgegeben sein.

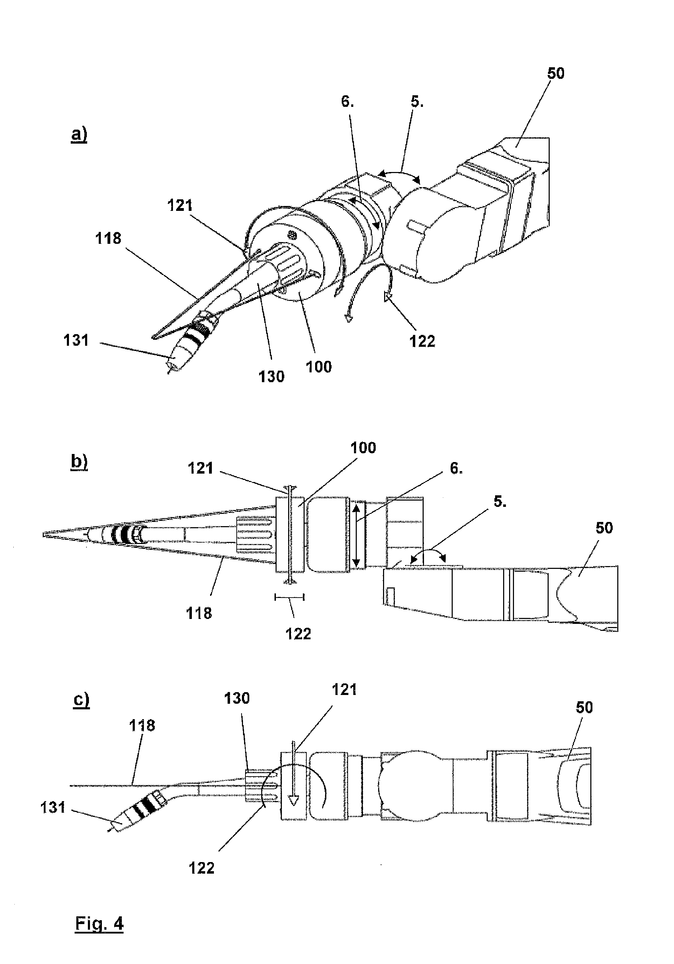

Figur 4 zeigt die in Figur 1 dargestellte erfinderische Robotervorrichtung in einer Detailansicht mit Bezug auf die Anordnung der Sensoreinrichtung an der Endachse der Robotervorrichtung, hier der sechsten Achse des beispielhaft beschriebenen Knickarmroboters. Wie für den Fachmann erkennbar, ist diese sechste Drehachse der Robotervorrichtung als Hohlachse ausgebildet, durch welche der Schweißbrenner 130 gehalten ist. Die in den Figuren 2a, 2b angegebene Sensoreinrichtung 100 ist bei dieser Ausführungsform an der Stirnseite des Dreharms 70 dieser sechsten Achse angebracht, derartig, dass sich der Brenner 130 durch das Mittenloch 120 des Sensorgehäuses 110, siehe Figur 2, hindurch erstreckt.

In der beschriebenen Ausführungsform wird insofern die Sensoreinrichtung 100 zusammen mit der sechsten Drehachse der Robotervorrichtung mitbewegt. Wie in Figur 4a angegeben, ist die Sensoreinrichtung 100 gleichzeitig drehbar zur sechsten Achse des Roboters (und damit zum Brenner) um eine Achse gelagert, welche parallel zur sechsten Achse der Robotervorrichtung 1 verläuft und in der beschriebenen Ausführungsform mit der Endachse der Robotereinrichtung zusammenfällt. Diese Drehung ist in der Figur mit der Drehachse angegeben, welche durch das Bezugszeichen 121 gekennzeichnet ist.

In der beschriebenen Ausführungsform erfolgt die Drehung motorisch, wobei die diesbezüglichen Einrichtungen auch innerhalb des Sensorgehäuses angeordnet sind bzw. sein können. Dabei umfasst die Sensoreinrichtung 100 einen festen Teil, der wie beschrieben an der sechsten Roboterachse befestigt ist sowie einen dazu, insbesondere pneumatisch oder motorisch, beweglichen Teil, welcher das in den Figuren sichtbare Sensorgehäuse 110 trägt.

In der beschriebenen Ausführungsform ist die Sensoreinrichtung 100 darüber hinaus relativ zur endseitigen Roboterdrehachse kippbar um eine Achse gelagert, welche senkrecht zur erstgenannten Achse 121 der Sensoreinrichtung 100 verläuft, die zweite Dreh- oder Kippachse ist durch den mit dem Bezugszeichen 122 versehenen Pfeil angegeben. Eine solche Verkippung kann beispielsweise mittels einer pneumatischen Verstelleinrichtung erfolgen, in der beschriebenen Ausführungsform um einen Winkel von ± 10 Grad. Zu diesem Zweck weist der Brenner 130 im Mittenloch 120 der Sensoreinrichtung 100 zu der Innenwandung 112 ein vorgegebenes Spiel auf, welches die notwendige relative Bewegung von Sensoreinrichtung 100 und Brenner 130 ermöglicht.

Aufgrund der beschriebenen Freiheitsgrade der Sensoreinrichtung 100 in der Bewegung relativ zu dem Effektor und der den Effektor tragenden Endachse des Roboters, wird eine hohe Flexibilität für die Sensorerfassung bereitgestellt. Dies wird insbesondere bei der in den Figuren angegebenen Lasertriangulations-Sensoreinrichtung 100 deutlich. Durch die relative Bewegung des zumindest einen Teils des Sensorgehäuses 110 zum Brenner 130, kann der Erfassungsort des Sensors, insbesondere auf oder an einem Werkstück im Rahmen der beschriebenen Bewegungsachsen 121, 122 einstellt werden, so dass eine größere Informationsmenge zum Führen des Effektors respektive des Brenners 130 ermittelt werden kann.

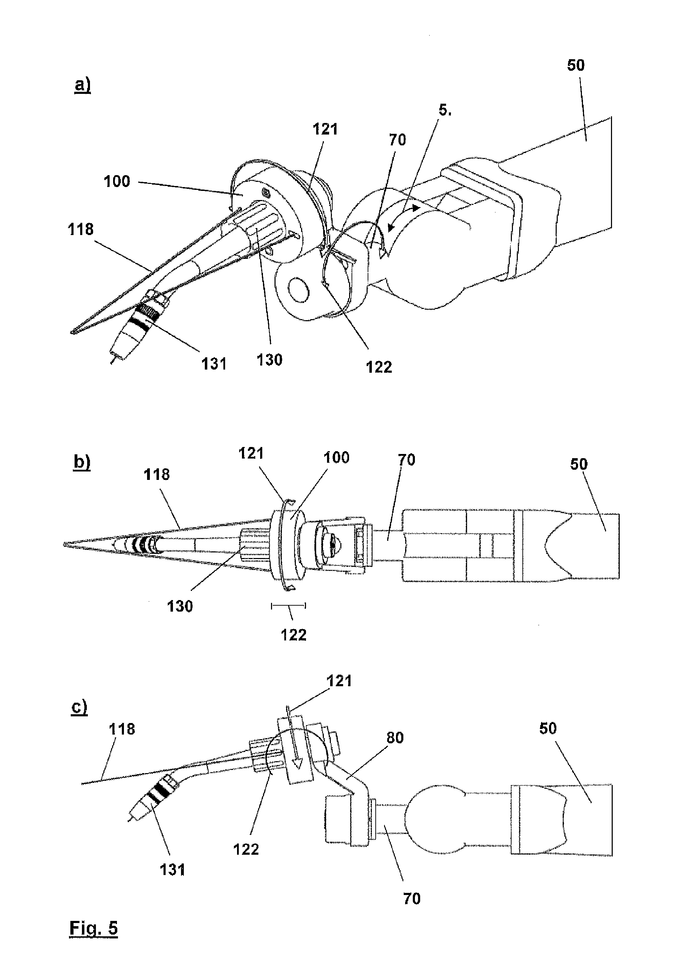

Eine weitere Ausführungsform einer erfindungsgemäß ausgebildeten Robotervorrichtung ist wiederum ausschnittsweise in den Figuren 5a-5c dargestellt. Der dargestellte Ausschnitt entspricht dem in Figur 1 angegebenen, mit dem Unterschied, dass die letzte Drehachse des Knickarmroboters nicht in Form einer Hohlachse, sondern als stabförmiger Dreharm ausgebildet ist, an dem ein gekröpftes Verbindungselement 80 angebracht ist, an dessen Endabschnitt sowohl der Brenner 130 als auch die Sensoreinrichtung 100 angebracht sind. Während die Brennereinrichtung 130 starr über das Verbindungselement 80 mit dem Dreharm 70 gekoppelt ist, ist die Sensoreinrichtung 100 wie in der erstbeschriebenen Ausführungsform sowohl drehbar um eine Achse, welche parallel zur Brennerachse verläuft, als auch kippbar um eine Kippachse, welche senkrecht zur erstgenannten Achse verläuft, gelagert. Die beiden Dreh- bzw. Kippachsen sind wiederum mit den Bewegungspfeilen 121, 122 gekennzeichnet. Wie bei der mit Bezug auf die Figuren 4a-4c beschriebenen ersten Ausführungsform wird bei der in Figur 5a-5c dargestellten zweiten Ausführungsform durch die Drehachse des Roboters, d.h. die sechste Achse, sowohl die Sensoreinrichtung 100 als auch der Brenner 130 mitbewegt, wobei durch die beschriebenen Freiheitsgrade des bzw. am Sensorgehäuse/s 110 die Einrichtungen 114, 115, 116, 117 relativ zum Brenner 130 bewegbar angeordnet sind.

In einer nicht dargestellten Ausführungsform der Erfindung kann insbesondere eine Verkippung von Sende-/Empfängereinrichtung nicht durch eine Verkippung des gesamten Sensorgehäuses, sondern durch eine Verkippung der jeweiligen Sende-/Empfängereinrichtung durchgeführt werden. Dabei kann das Sensorgehäuse der Sensoreinrichtung starr mit der Endachse der Robotervorrichtung verbunden sein, allein die jeweilige Sende-/Empfängereinrichtung der Sensoreinrichtung ist kippbar zum Sensorgehäuse angeordnet.

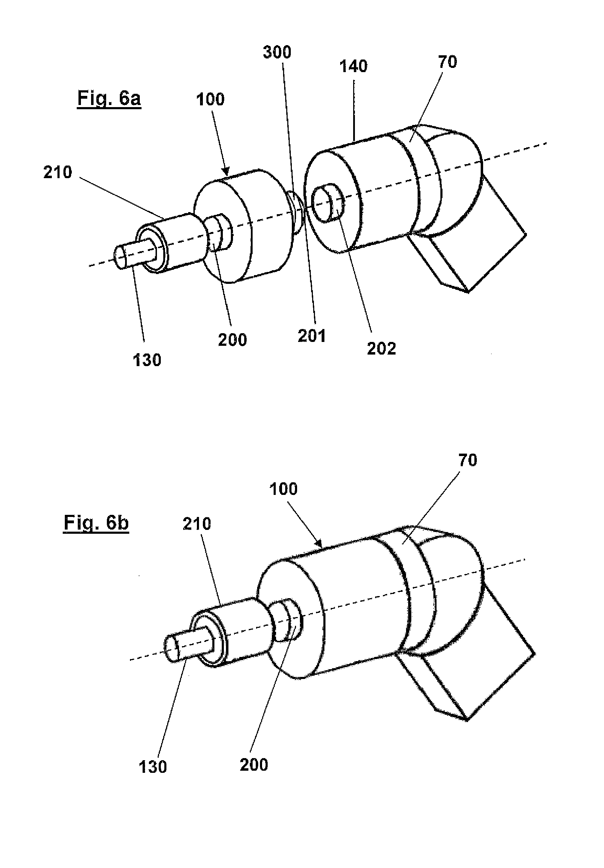

In den Figuren 6a, 6b ist jeweils eine Teilansicht einer Ausführungsform einer erfindungsgemäßen Robotervorrichtung dargestellt, wobei jede der beiden dargestellten Ausführungsformen eine Kollisionsbox 140 umfasst. Der Aufbau einer Kollisionsbox 140 ist in dem Stand der Technik bekannt. Herkömmlicherweise umfasst die Kollisionsbox 140 zwei Elemente, wobei ein Element fest mit dem Dreharm 70 verbunden ist und elastisch mit dem zweiten Element verbunden ist, wobei das zweite Element mit dem Brenner 130 verbunden ist. Der Brenner 130 wird durch die elastische Verbindung zwischen erstem und zweitem Element der Kollisionsbox 140 bewegt, wobei sich bei einem mechanischen Kontakt des Brenners 130 mit einem Werkstück über die elastische Verbindung zwischen den beiden Elementen der Abstand zwischen den Elementen ändert, wodurch ein Deaktivieren des Brenners 130 ausgelöst wird.

In dem Ausführungsbeispiel nach Fig. 6a ist die Kollisionsbox 40 fest mit dem Dreharm 70 verbunden. Über Zwischenstücke 202, 201 sowie eine Überwurfmutter 300 ist die Sensoreinheit 100 an der Kollisionsbox 140 fixiert. Über ein weiteres Zwischenstück 200 und eine Brenner-Überwurfmutter 210 ist der Brenner 130 an der Sensoreinheit 100 fixiert. Das dargestellte Ausführungsbeispiel einer erfindungsgemäßen Robotervorrichtung umfasst somit die drei voneinander getrennten Bauteile Brenner 130, Sensoreinheit 100 und Kollisionsbox 140, die jeweils über Zwischenstücke 200, 201, 202 und Überwurfmuttern 300, 210 miteinander fixiert sind. Vorliegend ist das Zwischenstück 202 in der Kollisionsbox 140 mit dem zweiten Element der Kollisionsbox 140 fixiert. Die Kollisionsbox 140 umfasst ferner ein erstes Element, das fest mit dem Dreharm 70 in Verbindung steht und zu dem das zweite Element bei einem mechanischen Kontakt des Brenners 130 mit einem Werkstück über die Hebelwirkung, die der Brenner 130 über den mechanischen Kontakt auf das zweite Element ausübt, auslenkbar ist.

In dem Ausführungsbeispiel nach Fig. 6b ist die Kollisionsbox 140 vollständig in der Sensoreinheit 100 integriert. Die Sensoreinheit 100 nach dem Ausführungsbeispiel von Fig. 6b umfasst somit das erste und zweite Element der Kollisionsbox 140, die gegeneinander auslenkbar sind und bei einer entsprechenden Auslenkung eine Abschaltautomatik zum Deaktivieren des Brenners 130 auslösen können. Im Vergleich zu dem Ausführungsbeispiel nach Fig. 6a ist das Ausführungsbeispiel nach Fig. 6b erheblich einfacher aufgebaut und ermöglicht eine erheblich kostengünstigere Herstellung. An dem Dreharm 70 sind nur zwei voneinander getrennte Bauteile, nämlich die Sensoreinheit 100 und der Brenner 130 fixiert. Das zusätzliche separate Bauteil einer Kollisionsbox 140 fällt in dem Ausführungsbeispiel nach Fig. 6b weg. Daraus ergibt sich auch, dass nur ein Zwischenstück 200 und nur eine Brenner-Überwurfmutter 210 zur Realisierung des Ausführungsbeispiels nach Fig. 6b erforderlich sind, wohingegen weitere Zwischenstücke 201, 202 und eine weitere Überwurfmutter 300 in dem Ausführungsbeispiel nach Fig. 6b nicht erforderlich sind. Die Integration der Kollisionsbox 140 in der Sensoreinheit 100 ist insbesondere dann vorteilhaft, wenn, wie in dem Ausführungsbeispiel nach Fig. 6b, die Abmessung des Außendurchmessers des ringartigen Gehäuses der Sensoreinrichtung 100 nicht größer ist als die Abmessung des Außendurchmessers des Dreharms 70. Denn dadurch ist trotz der durch die Integration der Kollisionsbox 140 in der Sensoreinheit 100 erforderlichen axialen Länge der Sensoreinheit 100 gewährleistet, dass die Sensoreinheit 100 bei dem Anfahren eines Werkstücks nicht hinderlich ist.

### Bezugszeichenliste

- 1: Knickarmroboter
- 1. - 6.: Drehachse
- 10: Robotersockel
- 12: Dreharm, erste Achse
- 20: Winkelfuß
- 30: Schwenkarm, zweite Achse
- 40: Schwenkteil, dritte Achse
- 50: Dreharm, vierte Achse
- 60: Schwenkgelenk, fünfte Achse
- 70: Dreharm, sechste Achse
- 80: Verbindungselement
- 100: Sensoreinrichtung
- 110: Sensorgehäuse
- 111: Außenmantelfläche
- 112: Innenmantelfläche
- 113: Stirnseite
- 114: Lasereinrichtung
- 115: Fotoempfänger
- 1151: erster Fotoempfänger
- 1152: zweiter Fotoempfänger
- 116: LED-Einrichtung
- 117: Videokamera
- 118: Laserstrahl
- 120: Mittenloch
- 121: Drehachse der Sensoreinrichtung
- 122: Kippachse der Sensoreinrichtung
- 130: Brenner
- 131: Brennerkopf
- 200: Zwischenstück
- 201: Zwischenstück
- 202: Zwischenstück
- 210: Brenner-Überwurfmutter
- 300: Überwurfmutter
- α: Triangulationswinkel
- β: Triangulationswinkel
- A: erste Suchrichtung
- B: zweite Suchrichtung

## Patentansprüche

1. Robotervorrichtung mit einer Sensoreinrichtung zur Handhabung, Montage und/oder Bearbeitung von Werkstücken, zumindest umfassend eine Reihe von Gliedern einer kinematischen Kette, welche miteinander durch Dreh- und/oder Schubgelenke verbunden sind, die zumindest teilweise durch gesteuerte Antriebe verstellbar sind, wobei die Gliederreihe an einem Ende eine als Drehachse ausgebildete Endachse aufweist, welche einen Effektor trägt, **dadurch gekennzeichnet, dass** die Sensoreinrichtung (100) ein ringartiges Gehäuse (110) umfassend ein Mittenloch (120) aufweist, wobei sich der Effektor (130) und/oder die Effektormedien durch das Mittenloch des Sensorgehäuses erstreckt bzw. erstrecken.

2. Robotervorrichtung nach Anspruch 1, **dadurch gekennzeichnet, dass** die Sensoreinrichtung (100) zumindest eine Sendeeinrichtung (114) und zumindest eine ihr zugeordnete Empfängereinrichtung (115, 1151, 1152) aufweist, welche jeweils an der dem Effektor (130) zugewandten Stirnseite (113) des Sensorgehäuses (110) angeordnet sein können.

3. Robotervorrichtung nach Anspruch 2, **dadurch gekennzeichnet, dass** Sendeeinrichtung (114, 116) und zugeordnete Empfängereinrichtung (115, 1151, 1152, 117) an der Stirnseite des Sensorgehäuses umfänglich beabstandet sind, insbesondere umfänglich um einen Winkel von größer 90 Grad, vorzugsweise größer 120 Grad, besonders vorzugsweise etwa 180 Grad beabstandet sind.

4. Robotervorrichtung nach Anspruch 2 oder 3, **dadurch gekennzeichnet**, **das**s die Sensoreinrichtung zumindest zwei Empfängereinrichtungen (115, 1151, 1152, 117) aufweist, die genau einer Sendeeinrichtung (114, 116) zugeordnet sind.

5. Robotervorrichtung nach Anspruch 4, **dadurch gekennzeichnet, dass** die Sendeeinrichtung (114, 116) in einem Drehsinn zwischen den ihr zugeordneten Empfängereinrichtungen (115, 1151, 1152, 117) angeordnet ist.

6. Robotervorrichtung nach einem der Ansprüche 1 bis 5,
**dadurch gekennzeichnet, dass** die Abmessung des Außendurchmessers des ringartigen Gehäuses (110) der Sensoreinrichtung (100) höchstens der Abmessung des Außendurchmessers der Endachse gleichkommt.

7. Robotervorrichtung nach einem der Ansprüche 1 bis 6,
**dadurch gekennzeichnet, dass** das Sensorgehäuse (110) starr mit der Endachse der Robotervorrichtung verbunden ist.

8. Robotervorrichtung nach einem der Ansprüche 1 bis 6,
**dadurch gekennzeichnet, dass** die Sensoreinrichtung (100) zumindest abschnittsweise, insbesondere das Sensorgehäuse (110) oder andere Teile der Sensoreinrichtung zur Endachse der Robotervorrichtung (1) bzw. zum Effektor (130) bewegbar gelagert ist.

9. Robotervorrichtung nach einem der Ansprüche 1 bis 6 oder 8, **dadurch gekennzeichnet, dass** das Sensorgehäuse (110) drehbar zur Endachse der Robotervorrichtung (1) bzw. zum Effektor (130) gelagert ist, wobei die Drehachse (121) des Sensorgehäuses (110) und die Endachse der Robotervorrichtung parallel zueinander oder geringfügig zueinander verkippt angeordnet sind.

10. Robotervorrichtung nach einem der Ansprüche 1 bis 6 oder 8, 9, **dadurch gekennzeichnet, dass** das Sensorgehäuse (110) zur Endachse der Robotervorrichtung (1) bzw. zum Effektor (130) um eine Achse (122) kippbar angeordnet ist, welche etwa senkrecht zur Längsachse des Sensorgehäuses und/oder etwa senkrecht zur Endachse der Robotervorrichtung (1) verläuft.

11. Robotervorrichtung nach einem der Ansprüche 1 bis 10, **dadurch gekennzeichnet, dass** an der dem Effektor (130) zugewandten Stirnseite (113) des Sensorgehäuses (110) ein bewegbarer Abdeckring vorgesehen ist zum Abdecken bzw. Freigeben einer Sendeeinrichtung (114, 116) und/oder einer Empfangseinrichtung (115, 117).

12. Robotervorrichtung nach einem der Ansprüche 1 bis 10, **dadurch gekennzeichnet, dass** die Endachse zum Tragen eines Effektors (130) als Hohlachse, insbesondere als hohler Dreharm ausgebildet ist.

13. Robotervorrichtung nach einem der Ansprüche 1 bis 12, **dadurch gekennzeichnet, dass** die Medienversorgung der Sensoreinrichtung (100) wie deren elektrische Versorgung und/oder Kühlmittelversorgung zusammen mit der Medienversorgung des Effektors (130) in einer gemeinsamen Kabelführungseinrichtung verläuft.

14. Robotervorrichtung nach einem der Ansprüche 1 bis 13, **dadurch gekennzeichnet, dass** die Sensoreinrichtung (100) eine Kollisionsbox umfasst, die eine Abschaltautomatik zum Deaktivieren des Effektors bei einem vorgegebenen mechanischen Kontakt des Effektors mit einem Werkstück aufweist.

15. Sensoreinrichtung für eine Robotervorrichtung nach einem der Ansprüche 1 bis 14.
